(19) Europäisches Patentamt
European Patent Office
Office européen des brevets

(11) **EP 4 266 192 A1**

(12) **EUROPEAN PATENT APPLICATION**
published in accordance with Art. 153(4) EPC

(43) Date of publication:
**25.10.2023 Bulletin 2023/43**

(21) Application number: **21925521.3**

(22) Date of filing: **29.12.2021**

(51) International Patent Classification (IPC):
**G06F 16/332** (2019.01)

(52) Cooperative Patent Classification (CPC):
**G06F 16/332; G06F 16/35**

(86) International application number:
**PCT/CN2021/142590**

(87) International publication number:
**WO 2022/170876 (18.08.2022 Gazette 2022/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.02.2021 CN 202110183814**

(71) Applicant: **Huawei Technologies Co., Ltd.**
**Shenzhen, Guangdong 518129 (CN)**

(72) Inventors:
• **XIA, Hairong**
  **Shenzhen, Guangdong 518129 (CN)**
• **JIANG, Guifeng**
  **Shenzhen, Guangdong 518129 (CN)**
• **SUN, Feifan**
  **Shenzhen, Guangdong 518129 (CN)**
• **WEN, Jian**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD, DEVICE AND SYSTEM FOR PROCESSING DIALOGUE DATA, AND STORAGE MEDIUM**

(57) A method for processing dialog data, an apparatus, a system, and a storage medium are provided. A dialog processing apparatus obtains dialog data, performs structured processing on the obtained dialog data, and outputs obtained structured data. The dialog data includes text data corresponding to a dialog performed between at least two dialog participants, key information in the dialog data is logically ordered in the structured data, and each piece of key information indicates a dialog topic of the dialog performed between the at least two dialog participants. In this way, in a multi-party interaction scenario involving artificial intelligence, key information output by the dialog processing apparatus is logically ordered. Compared with a manner in which the dialog processing apparatus directly outputs scattered and disordered dialog data, in this manner, any party that performs a dialog can more easily grasp key information in a dialog process, so that any party that performs a dialog does not need to repeatedly perform a dialog for a same dialog topic, to improve efficiency of the multi-party dialog.

FIG. 4

The flowchart shows:

S401: A dialog processing apparatus obtains dialog data, where the dialog data includes text data corresponding to a dialog performed between at least two dialog participants

S402: The dialog processing apparatus performs structured processing on the obtained dialog data to obtain structured data, where key information in the dialog data is logically ordered in the structured data, and each piece of key information indicates a dialog topic of the dialog performed between the at least two dialog

S403: The dialog processing apparatus outputs the structured data

## Description

## TECHNICAL FIELD

This application relates to the field of data processing technologies, and in particular, to a method for processing dialog data, an apparatus, a system, and a storage medium.

## BACKGROUND

In an actual scenario, a plurality of parties (including at least two dialog participants) generally perform a dialog through a communication tool. For example, in a customer service scenario, customer service personnel may provide services such as consultation, question answering, and return visit for a customer, and both parties may communicate in real time through a phone, instant messaging software, a network platform, or the like.

Due to complexity of interpersonal communication, key information involved in a multi-party communication process generally has problems such as disorder, combination, and separation. As a result, it is difficult for a plurality of parties to grasp all key information during mutual communication. In this case, more dialogs may be required between the plurality of parties. Consequently, efficiency of the multi-party dialog is reduced.

## SUMMARY

This application provides a method for processing dialog data, an apparatus, a system, and a storage medium, to reduce difficulty in grasping all key information during a multi-party dialog, and improve efficiency of a multi-party dialog.

According to a first aspect, this application provides a method for processing dialog data, where the method may be performed by a dialog processing apparatus. The dialog processing apparatus first obtains dialog data, where the dialog data includes text data corresponding to a dialog performed between at least two dialog participants. Dialog content between the dialog participants may include content in a form of pictures, text, voice, icons, and the like. The dialog processing apparatus may convert the dialog content into data in a text form based on the dialog content in various representation forms. The dialog processing apparatus then performs structured processing on the obtained dialog data, and outputs the obtained structured data, for example, displays (or displays through another display apparatus connected to the dialog processing apparatus) the structured data to the dialog participants. Key information in the dialog data is logically ordered in the structured data, and each piece of key information indicates a dialog topic of the dialog performed between the at least two dialog participants.

Because the key information output by the dialog processing apparatus is logically ordered, compared with a manner in which the dialog processing apparatus directly outputs scattered and disordered dialog data, in this manner, it is generally easier for any party that performs the dialog to grasp the key information in the dialog process. Therefore, for content of a dialog topic that has been expressed in the dialog process, any party that performs the dialog does not need to repeatedly express dialog content for the dialog topic, to improve efficiency of the multi-party dialog.

When the dialog processing apparatus has a data display function, the dialog processing apparatus may display a dialog interface to the dialog participants, and may display the structured data on the dialog interface after obtaining the structured data, so that the dialog participants can view the structured data on the dialog interface.

However, when the dialog processing apparatus does not have the data display function, for example, the dialog processing apparatus is specifically a server, the dialog processing apparatus may transmit the structured data to a display apparatus having an information display function, for example, a terminal device used by the dialog participants, so that the dialog processing apparatus can display the structured data to the dialog participants through the display apparatus.

In a possible implementation, when performing structured processing on the dialog data, the dialog processing apparatus may specifically first split the obtained dialog data to obtain a plurality of dialog turns, where each dialog turn includes one piece of key information in the structured data. In other words, each dialog turn may have only one dialog topic. The dialog processing apparatus may then sort the plurality of dialog turns based on semantics of the dialog turns and a dialog time sequence of the dialog turns, to generate the structured data. In this way, the key information is split at a fine granularity and logically sorted, so that logically ordered key information can be obtained. Therefore, when the key information is displayed, the dialog participants can grasp the key information.

In a possible implementation, when sorting the plurality of dialog turns obtained through splitting, the dialog processing apparatus may specifically first determine a dialog act of each dialog turn in the plurality of dialog turns, where the dialog act may be, for example, a dialog act of a "question" type or a dialog act of an "answer" type. The dialog processing apparatus may then generate a plurality of dialog segments based on dialog acts, the time sequence, and the semantics of the dialog turns, where dialog turns included in different dialog segments do not overlap. In this way, dialog turns in each dialog segment may be for a same dialog topic and are logically ordered in the dialog segment. Finally, the dialog processing apparatus may connect the plurality of dialog segments based on the time sequence of the dialog turns in the plurality of dialog segments, so that a network structure with hierarchical characteristics can be formed based on the plurality of dialog segments, and the key information is not only logically ordered in each dialog segment, but also logically ordered in the entire dialog process.

In a possible implementation, in the process of generating the structured data, the dialog processing apparatus may further resolve referential or implicit content, specifically, the dialog processing apparatus may determine whether referential content or implicit content exists in a target dialog turn, where the target dialog turn is any dialog turn in the plurality of dialog turns. When it is determined that the referential content or the implicit content exists, the dialog processing apparatus may search for the referential content or the implicit content from a dialog turn whose dialog time sequence is earlier than a dialog time sequence of the target dialog turn, and add the found referential content or implicit content to the target dialog turn. In this way, the referential or implicit content in the target dialog turn can be resolved, so that the dialog content included in the target dialog turn is clearer.

In a possible implementation, a connection relationship between the plurality of dialog segments may include a sequential connection and/or a nested connection. Certainly, the connection may further include another manner, for example, parallel connection. This is not limited in this embodiment.

In a possible implementation, the dialog processing apparatus may further display the key information in the structured data. In this way, it is convenient for the dialog participants to view and check the key information.

In a possible implementation, when the displayed key information does not satisfy an expectation of the dialog participants, the dialog participants may further modify the displayed key information. Correspondingly, the dialog processing apparatus may modify, in response to a modification operation for the key information, the key information in the structured data into information corresponding to the modification operation. Further, the dialog processing apparatus may further display the modified key information to the dialog participants.

In a possible implementation, the dialog processing apparatus may further perform a preset analysis operation based on the structured data to obtain an analysis result, and display the analysis result. For example, in a customer service scenario, the dialog processing apparatus may perform a further quantization operation based on structured data corresponding to dialog data between a customer and customer service personnel, to generate a quantization result for measuring working efficiency of the customer service personnel, so that the customer service personnel find an improvement point based on the quantization result and make up for a deficiency, and a manager can determine, based on the displayed quantization result, to perform comprehensive service appraisal on the customer service personnel.

In a possible implementation, when outputting the structured data to the dialog participants, the dialog processing apparatus may first determine dialog permission of the dialog participant, and display the structured data to the dialog participants only when the dialog permission of the dialog participant satisfies a preset condition. If the dialog permission of the dialog participants does not satisfy the preset condition, the dialog processing apparatus may not display the structured data or the like to the dialog participants. In this way, different dialog participants can be treated differently, to improve flexibility of implementing the solution.

In a possible implementation, when outputting the structured data, the dialog processing apparatus may specifically obtain a trigger operation of the dialog participants for displaying the structured data, to display the structured data based on the trigger operation. In this way, the dialog processing apparatus can flexibly determine, according to a willingness of the dialog participants, whether to display the structured data, to improve flexibility of displaying the structured data and a degree of friendliness to the dialog participants.

In a possible implementation, when outputting the structured data, the dialog processing apparatus may display the structured data in a form of a chart. Specifically, the dialog processing apparatus may display a sequence chart corresponding to the structured data, where a time sequence indicated in the sequence chart is a logical sequence of the key information. In this way, the sequence chart can be used to intuitively and clearly display the key information that is logically ordered to the dialog participants.

In a possible implementation, the dialog processing apparatus may display a dialog interface to the dialog participants. The dialog interface may include at least two areas, for example, a first area and a second area. The second area is for displaying dialog content between the at least two dialog participants. When the dialog processing apparatus obtains the structured data, the dialog processing apparatus may display the structured data in the first area on the dialog interface. In this way, the dialog participant can view the input dialog content in the second area, to ensure that the dialog content between the dialog participant and another dialog participant satisfies an expectation. In addition, the dialog participants can view, in the first area, the logical and orderly key information in the entire dialog process, to improve dialog efficiency.

In a possible implementation, the dialog processing apparatus may display prompt information, where the prompt information is determined based on the structured data, and the prompt information includes a target dialog topic and may be used to prompt the dialog participants to perform a dialog on the target dialog topic. In this way, the dialog processing apparatus can prompt the dialog participants through the prompt information, to guide the dialog participants to perform a subsequent dialog (specifically, a dialog on the target dialog topic).

According to a second aspect, this application further provides a dialog processing apparatus, where the apparatus includes:

an obtaining module, configured to obtain dialog data, where the dialog data includes text data corresponding to a dialog performed between at least two dialog participants;

a processing module, configured to perform structured processing on the dialog data to obtain structured data, where key information in the dialog data is logically ordered in the structured data, and each piece of key information indicates a dialog topic of the dialog performed between the at least two dialog participants; and

an output module, configured to output the structured data.

In a possible implementation, the processing module is further configured to:

split the dialog data to obtain a plurality of dialog turns, where each dialog turn includes one piece of key information in the structured data; and

sort the plurality of dialog turns based on semantics of the dialog turns and a dialog time sequence of the dialog turns, to generate the structured data.

In a possible implementation, the processing module is further configured to:

determine a dialog act of each dialog turn in the plurality of dialog turns;

generate a plurality of dialog segments based on dialog acts, the time sequence, and the semantics of the dialog turns, where dialog turns included in different dialog segments do not overlap; and

connect the plurality of dialog segments based on the time sequence of the dialog turns in the plurality of dialog segments.

In a possible implementation, the apparatus further includes:

a resolution module, configured to: determine whether referential content or implicit content exists in a target dialog turn, where the target dialog turn is any dialog turn in the plurality of dialog turns; search, when it is determined that the referential content or the implicit content exists, for the referential content or the implicit content from a dialog turn whose dialog time sequence is earlier than a dialog time sequence of the target dialog turn; and add the found referential content or implicit content to the target dialog turn.

In a possible implementation, a connection relationship between the plurality of dialog segments includes a sequential connection and/or a nested connection.

In a possible implementation, the output module is further configured to display the key information in the structured data.

In a possible implementation, the processing module is further configured to modify, in response to a modification operation for the key information, the key information in the structured data into information corresponding to the modification operation.

In a possible implementation, the output module is further configured to perform a preset analysis operation based on the structured data to obtain an analysis result, and display the analysis result.

In a possible implementation, the output module is further configured to:

determine dialog permission of the dialog participant; and

output the structured data for the dialog participant when the dialog permission of the dialog participant satisfies a preset condition.

In a possible implementation, the output module is further configured to:

obtain a trigger operation for outputting the structured data; and

output the structured data based on the trigger operation.

According to a third aspect, this application further provides a system for processing dialog data. The system includes a display apparatus and a dialog processing apparatus. The display apparatus is connected to the dialog processing apparatus, the dialog processing apparatus is configured to perform the method described in any implementation of the first aspect, and the display apparatus is configured to display structured data output by the dialog processing apparatus.

In a possible implementation, the display apparatus is further configured to display a dialog interface, and is further configured to display the structured data in a first area in the dialog interface, where the dialog interface includes the first area and a second area, and the second area is for displaying dialog content between the at least two dialog participants.

In a possible implementation, the display apparatus is further configured to display a sequence chart corresponding to the structured data, where a time sequence indicated by the sequence chart is a logical sequence of the key information.

In a possible implementation, the display apparatus is further configured to display prompt information, where the prompt information is determined based on the structured data, the prompt information includes a target dialog topic, and the prompt information is for prompting the dialog participant to perform a dialog on the target dialog topic.

According to a fourth aspect, an embodiment of this application further provides a dialog processing apparatus. The apparatus includes a memory and a processor. The memory and the memory communicate with each other, and the processor is configured to execute instructions stored in the memory, to perform the method described in any implementation of the first aspect.

According to a fifth aspect, an embodiment of this application further provides a display apparatus. The apparatus includes a memory and a processor. The memory and the memory communicate with each other, and the processor is configured to execute instructions stored in the memory, to display structured data. The structured data is obtained by performing structured processing on dialog data, the dialog data includes text data corresponding to a dialog performed between at least two dialog participants, key information in the dialog data is logically ordered in the structured data, and each piece of key information indicates a dialog topic of the dialog performed between the at least two dialog participants.

In a possible implementation, the display apparatus is further configured to display a dialog interface, and is further configured to display the structured data in a first area in the dialog interface, where the dialog interface includes the first area and a second area, and the second area is for displaying dialog content between the at least two dialog participants.

In a possible implementation, the display apparatus is further configured to display a sequence chart corresponding to the structured data, where a time sequence indicated by the sequence chart is a logical sequence of the key information.

In a possible implementation, the display apparatus is further configured to display prompt information, where the prompt information is determined based on the structured data, the prompt information includes a target dialog topic, and the prompt information is for prompting the dialog participant to perform a dialog on the target dialog topic.

According to a sixth aspect, this application provides a chip, and the chip includes a processor and a chip interface. The chip interface is configured to receive instructions and transmit the instructions to the processor. The processor executes the foregoing instructions to perform the method for processing dialog data according to any aspect of the first aspect.

According to a seventh aspect, this application provides a computer-readable storage medium. The computer-readable storage medium stores instructions, and when the instructions are run on a computer device, the computer device is enabled to perform the method according to the first aspect.

According to an eighth aspect, this application provides a computer program product including instructions. When the computer program product is run on a computer device, the computer device is enabled to perform the method according to the first aspect.

In this application, based on implementations according to the foregoing aspects, the implementations may be further combined to provide more implementations.

## BRIEF DESCRIPTION OF DRAWINGS

To describe technical solutions of embodiments of this application more clearly, the following briefly describes the accompanying drawings for describing embodiments. It is clear that the accompanying drawings in the following descriptions show merely some embodiments of this application, and a person of ordinary skill in the art may derive other drawings from these accompanying drawings.

FIG. 1 is a schematic diagram dialog data between customer service personnel and a customer according to an embodiment of this application;

FIG. 2 is a schematic diagram of structured data including logically ordered key information according to an embodiment of this application;

FIG. 3 is a schematic diagram of a hardware structure of a dialog processing apparatus according to an embodiment of this application;

FIG. 4 is a schematic flowchart of a method for processing dialog data according to an embodiment of this application;

FIG. 5 is a schematic diagram of an example dialog interface according to an embodiment of this application;

FIG. 6 is a schematic diagram of obtaining a plurality of dialog turns through splitting according to an embodiment of this application;

FIG. 7 is a schematic diagram of a status of a dialog segment according to an embodiment of this application;

FIG. 8 is a schematic diagram of a data structure of a dialog segment according to an embodiment of this application;

FIG. 9 is a schematic diagram of a data structure of a dialog turn according to an embodiment of this application;

FIG. 10 is a schematic diagram of a connection relationship between a plurality of dialog segments according to an embodiment of this application;

FIG. 11 is a sequence chart generated based on structured data according to an embodiment of this application;

FIG. 12 is a schematic diagram of a plurality of dialog structures according to an embodiment of this application; and

FIG. 13 is a schematic diagram of a structure of a dialog processing apparatus according to an embodiment of this application.

## DESCRIPTION OF EMBODIMENTS

The following describes technical solutions in embodiments of the present invention with reference to accompanying drawings. It is clearly that the described embodiments are merely some rather than all of embodiments of this specification.

In the descriptions of this specification, "an embodiment", "some embodiments", or the like indicates that one or more embodiments of this specification include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In the descriptions of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this specification, "a plurality of' means two or more than two.

In the descriptions of this specification, the terms "first" and "second" are merely intended for description, and shall not be understood as an indication or implication of relative importance or implicit indication of a quantity of indicated technical features. Therefore, a feature limited by "first" or "second" may explicitly or implicitly include one or more features. The terms "include", "have", and their variants all mean "include but are not limited to", unless otherwise specifically emphasized in another manner.

In a process in which a plurality of dialog participants perform a dialog, it is generally difficult to implement the simplest dialog form of "one question and one answer". To be specific, after one party asks a question, another party answers the question. After the question is answered, one party continues to raise a new question for another party to answer, and the cycle continues. In an actual dialog scenario, one party often raises a plurality of questions consecutively, or another party inserts a new question when one party answers a question. This makes it difficult for a plurality of parties to grasp all key information in the dialog in time. For example, some key information is ignored in the multi-party communication process, or a question raised by one party cannot correspond to an answer made by another party. As a result, the plurality of parties need to go through more dialogs. This reduces multi-party dialog efficiency.

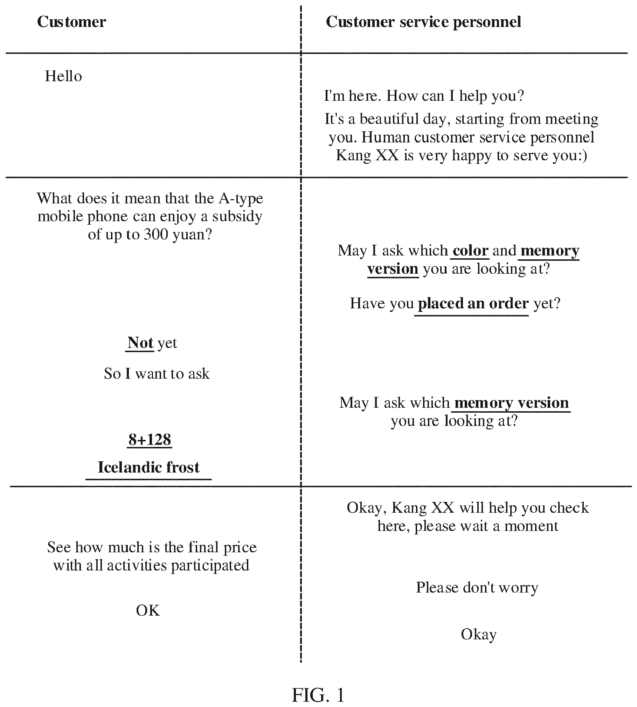

For ease of understanding, the following uses a dialog process between a customer and customer service personnel (referred to as "customer service personnel" below) as an example. In this example, the dialog between the customer and the customer service personnel involves information such as a color, a memory, and a price of an A-type mobile phone. For specific dialog data, refer to FIG. 1.

As shown in FIG. 1, when the customer asks the customer service personnel about the price of the A-type mobile phone, the customer service personnel continuously ask the customer about the "color" and a "memory version" of the mobile phone, and "whether to place an order". When answering the questions, the customer answers the latest question "whether to place an order" raised by the customer service personnel and does not continue to answer the previous questions (namely, the questions about the color and the memory of the mobile phone). Therefore, the customer service personnel repeat the previous questions, to guide the customer to answer the (memory) information for determining the price of the mobile phone. As can be seen, due to uncertainty of a form of the dialog between the two parties, an additional dialog is added between the customer service personnel and the customer. To be specific, in FIG. 1, the customer service personnel repeatedly ask the customer about the memory version of the mobile phone and the like, thereby reducing efficiency of communication between the customer and the customer service personnel.

Based on this, an embodiment of this application provides a method for processing dialog data, to improve multi-party dialog efficiency. In a specific implementation, the method may be applied to a dialog processing apparatus. The dialog processing apparatus can perform structured processing on dialog data between a plurality of parties, and output structured data. For example, the structured data may be displayed to one or more parties, or transmitted to another display apparatus to display the structured data. Not only the structured data includes logically ordered key information, but also each piece of key information may indicate a dialog topic in a multi-party dialog. For example, in the dialog data shown in FIG. 1, the key information may be specifically shown in the following Table 1.

**Table 1**

| Model | A-type |
|---|---|
| Whether to place an order | No |
| Model | A-type |
| Color | Icelandic frost |
| Memory version | 8+128 |

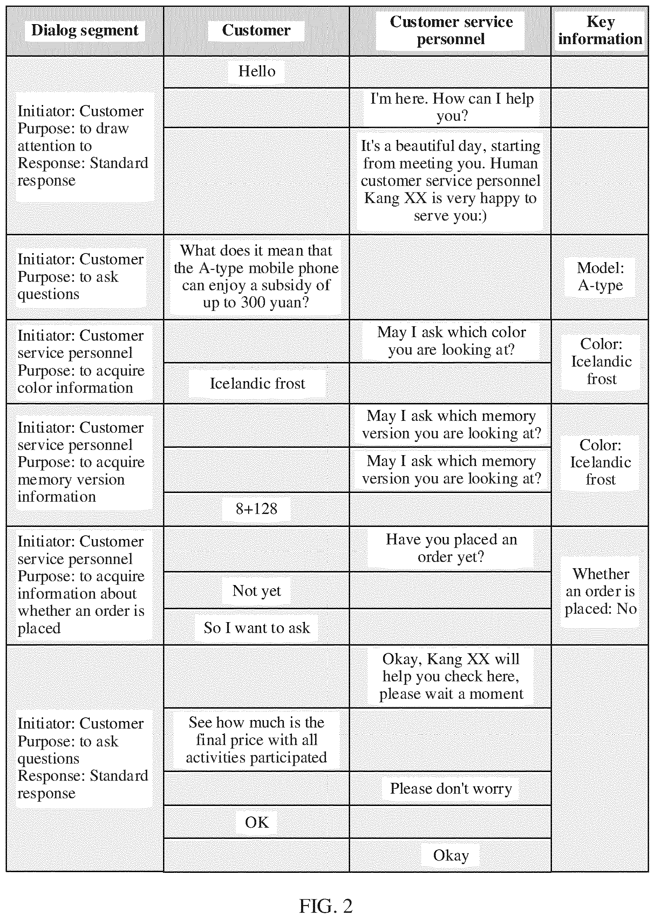

Correspondingly, based on the dialog content shown in FIG. 1, the dialog processing apparatus may directly output Table 1 as structured data, or structured data that is output by the dialog processing apparatus and that includes logically ordered key information may be shown in FIG. 2.

Because the key information output by the dialog processing apparatus is logically ordered, compared with a manner of directly outputting scattered and disordered dialog data, in this manner, it is generally easier for any party that performs the dialog to grasp the key information in the dialog process. Therefore, for content of a dialog topic that has been expressed in the dialog process, any party that performs the dialog does not need to repeat dialog content for the dialog topic, to improve efficiency of the multi-party dialog.

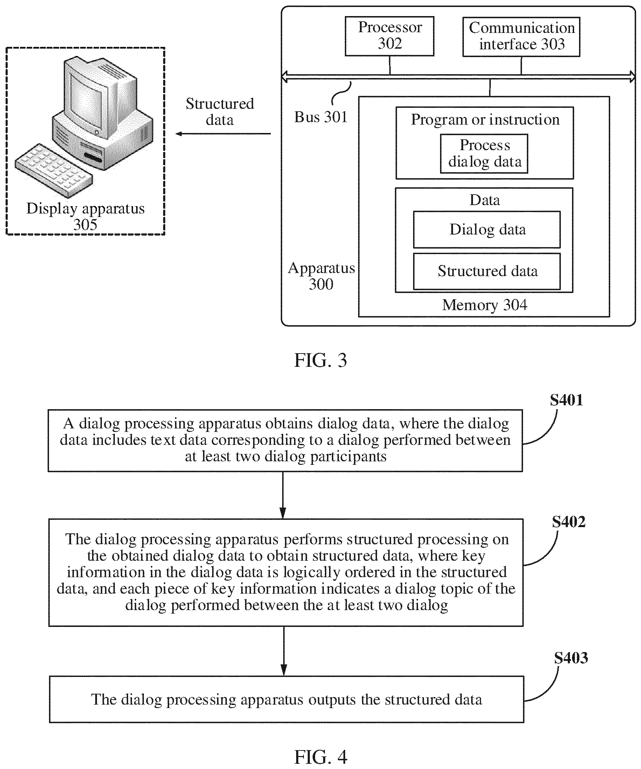

The following describes embodiments of this application with reference to the accompanying drawings. The method for processing dialog data provided in this embodiment of this application may be applied to an apparatus 300 shown in FIG. 3, for example, the foregoing dialog processing apparatus.

As shown in FIG. 3, the apparatus 300 may include a bus 301, at least one processor 302, at least one communication interface 303, and at least one memory 304. The processor 302, the memory 304, and the communication interface 303 communicate with each other through the bus 301. The bus 301 may be a peripheral component interconnect (peripheral component interconnect, PCI) bus, a peripheral component interconnect express (peripheral component interconnect express, PCIe) bus, an extended industry standard architecture (extended industry standard architecture, EISA) bus, or the like. Buses may be classified into an address bus, a data bus, a control bus, and the like. For ease of representation, only one thick line is used to represent the bus in FIG. 3, but this does not indicate that there is only one bus or only one type of bus. The communication interface 303 is configured to communicate with the outside, for example, receive dialog data input by a user through a data input device (for example, a mouse, a keyboard, or a microphone).

The apparatus 300 may be a personal computer (personal computer, PC) such as a tablet computer or a desktop computer, or may be a workstation, a server, or the like.

The processor 302 may be a central processing unit (central processing unit, CPU), a field programmable gate array (field programmable gate array, FPGA), or an application-specific integrated circuit (application specific integrated circuit, ASIC). A computer device may provide a computing resource for the user through the processor.

The memory 304 stores a program or instructions, for example, a program or instructions required for processing dialog data. The processor 302 executes the program or the instructions to process dialog data between a plurality of parties. Certainly, the memory 304 may further store data, for example, store dialog data between a plurality of parties, or structured data generated based on the dialog data. The processor 304 may obtain the data and the like by reading the memory 304. It should be noted that, the memory 304 may be integrated into the apparatus 300, or may be independent of the apparatus 300. The hardware structure of the apparatus 300 shown in FIG. 3 is not used to limit hardware composition of the apparatus 300 in an actual application.

The memory 304 may be a volatile memory (volatile memory) or a non-volatile memory (non-volatile memory), or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a hard disk drive (Hard Disk Drive, HDD), a solid state drive (Solid State Drive, SSD), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that, when the apparatus 300 shown in FIG. 3 has a function of displaying information, the apparatus 300 may further include a display (not shown in FIG. 3), where the display may be configured to display structured data obtained by the processor 302 by executing a program or instructions. When the apparatus 300 shown in FIG. 3 does not have the function of displaying information, the apparatus 300 may further be wirelessly or wiredly connected to an external display apparatus 305, and after obtaining structured data, the apparatus 300 may send the structured data to the display apparatus 305, so that the display apparatus 305 displays the structured data.

To make the technical solutions of this application clearer and easier to understand, the following describes in detail the method for processing dialog data in embodiments of this application through an example in which a dialog processing apparatus processes dialog data. The dialog processing apparatus may be implemented through hardware, for example, may be the foregoing apparatus 300; or the dialog processing apparatus may be implemented through software, for example, may be a functional module responsible for dialog processing on the apparatus 300; or the dialog processing apparatus may be used as a cloud service to provide a dialog data processing service for a participant in a dialog.

FIG. 4 is a schematic flowchart of a method for processing dialog data. The method may further include the following steps.

S401: A dialog processing apparatus obtains dialog data, where the dialog data includes text data corresponding to a dialog performed between at least two dialog participants.

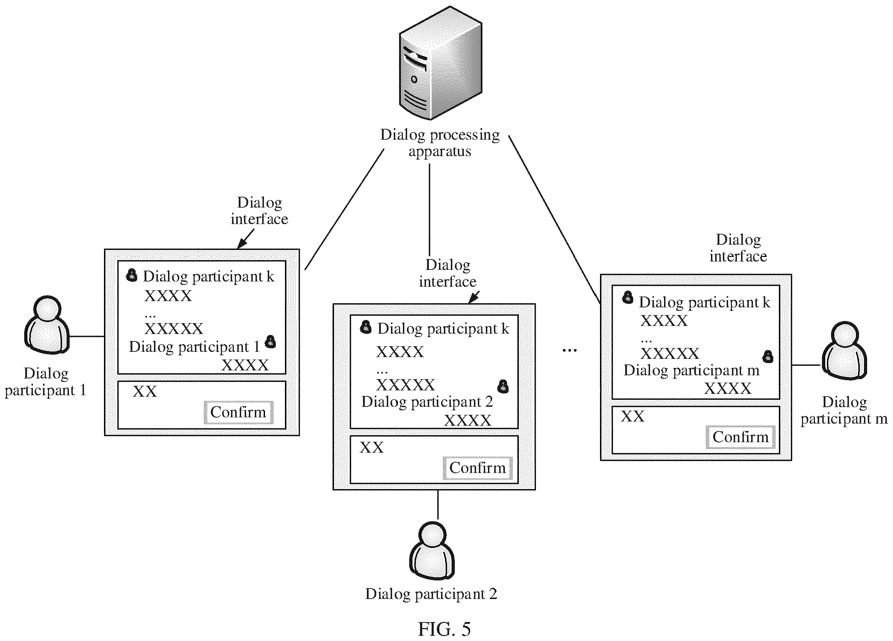

In this embodiment, when the plurality of dialog participants perform a dialog with each other, a real-time dialog may be performed through a terminal device such as a mobile phone, or through instant messaging software, or through a network platform, and the dialog processing apparatus may obtain the dialog data from the terminal device, the instant messaging software, or the network platform. In another implementation, the dialog processing apparatus may be an instant messenger (Instant Messenger, IM) device or IM software, and supports displaying a dialog interface shown in FIG. 5 to each party, where each party can input dialog content on the dialog interface (where a dialog participant k in FIG. 5 refers to any other dialog participant). In this way, the dialog processing apparatus may obtain dialog data between the plurality of parties based on input of each party.

In an actual application, the dialog interface may include at least two areas, referred to as a first area and a second area below for ease of description. The second area may be used to display dialog content between the dialog participants, and the first area in the dialog interface may be used to display other content, for example, structured data generated based on the dialog data described below.

A form of expression of the dialog content may be a form such as text, voice, audio, an icon, a picture, or a video. Generally, dialog content in a non-text form may also be indirectly described through text. Therefore, in this embodiment, an example in which the form of expression of the dialog content is text is mainly used. Correspondingly, the dialog data obtained by the dialog processing apparatus may be specifically text data obtained based on the dialog content in the text form

In an example of obtaining text data, a dialog has a life cycle of "start-ongoing-end". Therefore, after a dialog process is started, new dialog content input by one of the dialog participants may flow among a plurality of other dialog participants until the dialog ends. When the dialog is ongoing, dialog content may be recorded into a database. For example, when the plurality of parties perform a dialog on the dialog interface provided by the dialog processing apparatus, the dialog processing apparatus may record dialog content in a log manner, and write the dialog content into log text in the text form, where one log may include four fields: a sender, a receiver, a timestamp, and the dialog content. The sender is the party that provides the new dialog content, and the receiver is the remaining one or more parties that participate in the dialog. Therefore, the dialog processing apparatus may obtain the text data from the recorded log text. In another example of obtaining text data, the dialog processing apparatus may alternatively directly obtain the text data from the dialog interface between the plurality of parties. In this embodiment, a specific implementation in which the dialog processing apparatus obtains the text data is not limited.

S402: The dialog processing apparatus performs structured processing on the obtained dialog data to obtain structured data, where key information in the dialog data is logically ordered in the structured data, and each piece of key information indicates a dialog topic of the dialog performed between the at least two dialog participants.

Logic of dialog content during the dialog between the plurality of parties may be disordered. For example, as shown in FIG. 1, the customer does not answer the questions according to the sequence of the questions raised by the customer service personnel. In this case, if the dialog content is directly displayed to the dialog participants, it may be difficult for the dialog participants to grasp all key information.

Therefore, in this embodiment, the dialog processing apparatus may perform structured processing on the dialog data to obtain the structured data, so that difficulty in grasping all key information by the dialog participants can be reduced by using the structured data. Specifically, the dialog processing apparatus may extract the key information included in the dialog data, where each piece of key information indicates a single dialog topic of the dialog participants in the dialog process. In the customer service scenario shown in FIG. 1, the key information in the dialog data may include "whether to place an order", and the indicated dialog topic is an order placing situation for the A-type mobile phone. The dialog processing apparatus may then sort all key information based on semantic logic, to form logically ordered structured data. For example, for the dialog data shown in FIG. 1, the structured data obtained by the dialog processing apparatus may be, for example, shown in Table 1.

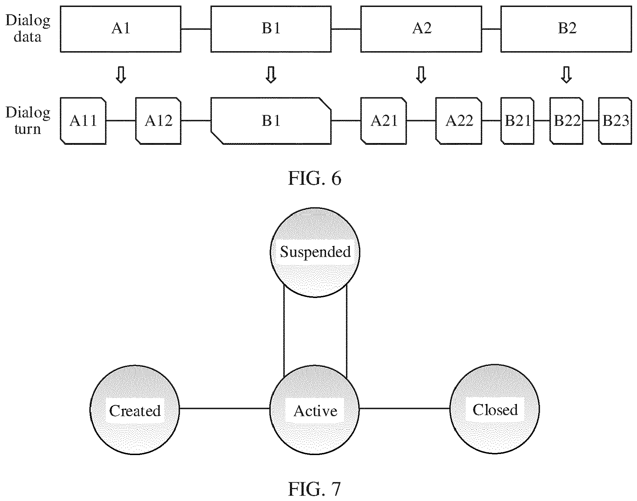

In a possible specific implementation, the dialog processing apparatus may split the dialog data to obtain a plurality of dialog turns (dialog turns). Each dialog turn includes one piece of key information. In other words, each dialog turn corresponds to one dialog topic. For example, the dialog processing apparatus may input the dialog data into a pre-trained splitting model, and obtain a plurality of dialog turns output by the splitting model. As shown in FIG. 6, for dialog data including A1, B1, A2, and B2, a plurality of dialog turns such as A11, A12, B1, A21, A22, B21, B22, and B23 may be obtained by the splitting model through splitting. For example, assuming that A1 is "What color and memory version are you looking at" in FIG. 1, two dialog turns obtained through the splitting model may be "What color are you looking at" (A11) and "What memory version are you looking at" (A12) respectively.

In some examples, the pre-trained splitting model may be, for example, any one of or a combination of a plurality of models of a hidden Markov model (hidden markov model, HMM), a conditional random field (conditional random field, CRF) model, a support vector machine (support vector machine, SVM) model, a deep learning-based (BiISTM+CRF) model, and a bidirectional encoder representation from transformers (bidirectional encoder representation from transformers, BERT) model based on large-scale unsupervised data. In an actual application, another possible model may alternatively be used. This is not limited in this embodiment.

For example, it is assumed that the splitting model for splitting the dialog data includes a (BERT+BiLSTM+CRF) model. In this case, the BERT model may be used as a feature extractor to extract a feature of the dialog data, and the (BiLSTM+CRF) model may split the dialog data into a plurality of dialog turns based on the feature extracted by the BERT model. Correspondingly, when pre-training the (BERT+BiLSTM+CRF) model, the dialog processing apparatus (or another device, or the like) may specifically complete training through a pre-obtained sample set, for example, may obtain training samples from a log file stored in the database and construct the sample set. The sample set may include a training set, a validation set, and a test set. The dialog processing apparatus may then construct a (BERT+BiLSTM+CRF) network architecture, and perform iterative training on the network architecture by using the sample set to obtain the (BERT+BiLSTM+CRF) model.

After obtaining the plurality of dialog turns, the dialog processing apparatus may sort the plurality of dialog turns based on semantics and a dialog time sequence of the dialog turns, to generate the structured data.

In a specific implementation, the dialog processing apparatus may first input each dialog turn into a pre-trained dialog act model, so that the dialog act model outputs a dialog act (dialog act) of each dialog turn. The dialog act model may be, for example, a CRF model, an SVM model, or a BERT model that is pre-trained. In an actual application, the dialog act model may be integrated into the foregoing splitting model, or the dialog act of each dialog turn is sequentially determined through the dialog act model after the plurality of dialog turns are obtained by the splitting model through splitting. A training process of the dialog act model is similar to a training process of an existing machine learning model. For understanding, refer to the foregoing description of the process of using the dialog act model. Details are not described herein again.

The dialog act is an abstract of the semantics of the dialog content, and may further include two types: an active act and a passive act. The active act has a function of raising a new topic (a dialog topic) in a dialog, and the passive act may be used to respond to the active act. In an example, the dialog act may include, for example, two types: "question" and "answer", and may be used to identify a pairing relationship between dialog turns. It should be understood that, in a plurality of dialog scenarios, after one party raises a question, another party may generally answer the question. Based on this, for a dialog turn marked with the "question" type (similar to that one party raises a question), the dialog processing apparatus may pair at least one dialog turn of the "answer" type for the dialog turn (similar to that another party answers the question), to implement pairing between dialog turns.

The dialog processing apparatus may then generate a plurality of dialog segments based on the dialog act corresponding to each dialog turn, the semantics of the dialog turns, and the time sequence of the dialog turns, where dialog turns included in different dialog segments do not overlap. For example, when generating the dialog segments, the dialog processing apparatus may first determine whether a dialog act of a dialog turn belongs to the "question" type. If the dialog act belongs to the "question" type, it indicates that the dialog turn can be used to trigger a new topic, and the dialog processing apparatus may determine whether a dialog turn that has same semantics as the dialog turn and belongs to the "question" type exists in the created dialog segments. If the dialog turn exists, the dialog processing apparatus adds the dialog turn to the dialog segments; otherwise, the dialog processing apparatus may create a new dialog segment based on the dialog turn. However, if the dialog act of the dialog turn belongs to the "answer" type, the dialog processing apparatus may match the dialog turn with the created dialog segments, and add the dialog turn to a successfully matched dialog segment.

In an example, when matching a dialog turn with the dialog segments, the dialog processing apparatus may calculate a matching probability between the dialog turn and each dialog segment. For example, the matching probability may be obtained by performing weighted summation on a time sequence matching probability, a dialog act matching probability, and a semantic matching probability.

The time sequence matching probability may be, for example, obtained through calculation based on a time sequence distance between the dialog turn and a dialog turn in the dialog segment. In addition, a larger time sequence distance indicates a smaller time sequence matching probability between two dialog turns. On the contrary, a smaller time sequence distance indicates a larger time sequence matching probability between two dialog turns. A mapping relationship between the magnitude of the time sequence matching probability and the time sequence distance may be established in a manner such as a pre-trained model or a pre-constructed algorithm function. This is not limited in this embodiment.

The dialog act matching probability may be determined based on, for example, whether dialog acts of two dialog turns match. In addition, if the dialog acts match (for example, the dialog act of one dialog turn belongs to "question", and the dialog act of the other dialog turn belongs to "answer"), the dialog act matching probability is higher. On the contrary, if the two dialog acts do not match, the dialog act matching probability is lower. For example, when the dialog acts of the two dialog turns match, the dialog act matching probability is 1; or when the dialog acts of the two dialog turns do not match, the dialog act matching probability is 0.

The semantic matching probability represents a semantic correlation between the two dialog turns. In addition, if the semantic correlation between the two dialog turns is high, the semantic matching probability of the two dialog turns is higher; and if the semantic correlation between the two dialog turns is low, the semantic matching probability of the two dialog turns is lower. The semantic matching probability may be any one or a combination of a plurality of models of a deep structured semantic model (Deep Structured Semantic Model, DSSM), a bilateral multi-perspective matching (bilateral multi-perspective matching, BiMPM) model, a SimNet model, and a BERT model that are pre-trained.

After determining the time sequence matching probability, the dialog act matching probability, and the semantic matching probability, the dialog processing apparatus may calculate a matching probability P between the dialog turn and the dialog segment based on the following formula (1):

$$P = a*P_{\text{time sequence}} + b*P_{\text{act}} + c*P_{\text{semantics}} \ (1),$$

where

$P_{\text{time sequence}}$ represents the time sequence matching probability, $P_{\text{act}}$ represents the dialog act matching probability, and $P_{\text{semantics}}$ represents the semantic matching probability, a, b, and c are corresponding weight values, and values of a, b, and c may be preset, for example, may be empirical values. Certainly, the values of a, b, and c may alternatively be determined in another manner.

In an actual application, when determining a dialog segment that matches a dialog turn, the dialog processing apparatus may separately calculate a matching probability between the dialog turn and each dialog segment, and choose to add the dialog turn to a dialog segment corresponding to a maximum matching probability. It should be noted that, the foregoing described process is merely used as an example for description of matching a dialog segment. In an actual application, the dialog processing apparatus may determine, based on a dialog act, a time sequence, and semantics of a dialog turn, a dialog segment to which the dialog turn is to be added in another manner. This is not limited in this embodiment.

Based on the foregoing process, the dialog processing apparatus may divide dialog turns into different dialog segments, and each dialog turn belongs to only one dialog segment. Because different dialog turns in the dialog segments have matched dialog acts and similar semantics, dialog turns included in each dialog segment have a same dialog topic. In addition, a logical sequence of dialog turns in a dialog segment may be determined based on a time sequence of the dialog turns in the dialog segment. It should be noted that, in an actual dialog scenario, a dialog turn of the "question" type is not closely paired with a dialog turn of the "answer" type (in other words, a dialog mode of one question and one answer is not satisfied), and a plurality of consecutive dialog turns of the "question" type are often followed by a plurality of consecutive dialog turns of the "answer" type. In this case, the dialog processing apparatus may further sort the dialog turns in the dialog segment with reference to semantics, dialog acts, and a time sequence of the dialog turns. For example, for each dialog turn that belongs to the "question" type in the dialog segment, the dialog processing apparatus may select, from other dialog turns based on semantics and a time sequence of the dialog turn, a dialog turn that belongs to the "answer" type and that has matched semantics and a closest time sequence, to perform pairing. In this way, logical sorting of a plurality of dialog turns in a dialog segment can be implemented.

Optionally, each dialog segment may have a corresponding status after being created. In an example, in this embodiment, the status of the dialog segment may include "created", "active", "suspended", and "closed", as shown in FIG. 7. When the dialog segment is created, the status of the dialog segment may be "created". When a dialog turn is added to the dialog segment, the status of the dialog segment may be adjusted from "created" to "active". When the dialog segment includes a plurality of dialog turns that match each other, or when dialog turn matching times out, the status of the dialog segment may be adjusted from "active" to "closed". In this case, no new dialog turn is received in the dialog segment. If the dialog segment satisfies a preset closed condition, for example, duration in which the dialog segment is in the "active" state exceeds preset duration, the status of the dialog segment may be adjusted from "active" to "suspended". In this case, the dialog processing apparatus may not perform a related operation about the dialog segment. When there is an active event such as that a new dialog turn matches the dialog segment, the status of the dialog segment may be adjusted from "suspended" to "active"; or when duration in which the dialog segment is "suspended" exceeds preset duration, the status of the dialog segment may alternatively be directly adjusted to the "closed" state. In an actual application, each dialog segment may be considered as a dialog thread (dialog thread) and has a corresponding status and a life cycle (namely, duration from being "created" to being "closed"). For each dialog segment (dialog thread), the dialog processing apparatus may manage the dialog segment through a dialog segment manager (or referred to as a dialog thread manager or the like) in the dialog segment, and may specifically create a dialog segment, adjust a status, or the like.

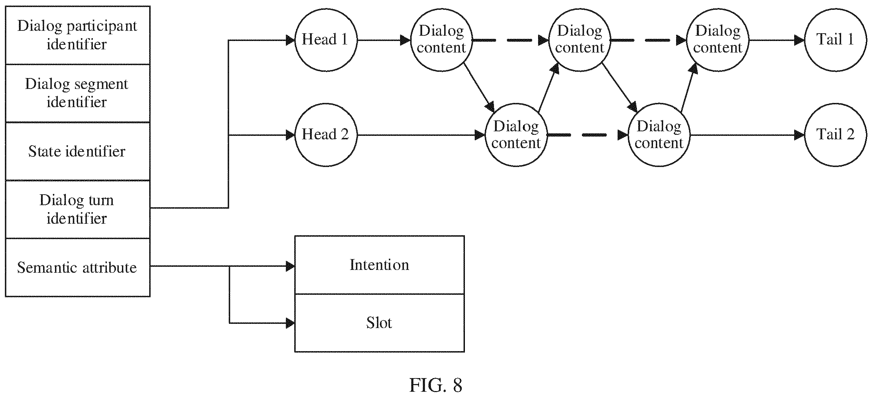

After a plurality of dialog segments are obtained, the dialog processing apparatus may perform structured processing on each dialog segment (namely, key information included in each dialog turn in the dialog segment). In an example, after the dialog processing apparatus performs structured processing on each dialog segment, a data structure of each dialog segment may be shown in FIG. 8. The data structure includes an identifier of a dialog participant, a dialog segment identifier, a state identifier of the dialog segment, an included dialog turn identifier, and semantic attributes. The identifier of the dialog participant may be, for example, a name of the dialog participant. The dialog segment identifier may be, for example, a number of the dialog segment. The state identifier of the dialog segment may indicate, for example, a state such as "created", "active", "suspended", or "closed" above. Key information included in the semantic attributes may be used to describe the foregoing dialog topic, and the key information included in the semantic attributes is information such as an intention (intention) and a slot (slots, which is a description of a key-value pair of text in a specific section in a dialog turn) corresponding to the dialog segment. The semantic attributes may be implemented, for example, through a dictionary. The dialog turn identifier indicates a plurality of dialog turns that are connected between the plurality of parties based on a dialog logical sequence. In an actual application, some of the plurality of dialog turns may be other dialog segments. For example, during a dialog on a dialog topic A between the plurality of parties, dialog content on a dialog topic B is inserted. In this case, a dialog segment corresponding to the dialog topic B may be nested in a dialog segment corresponding to the dialog topic A.

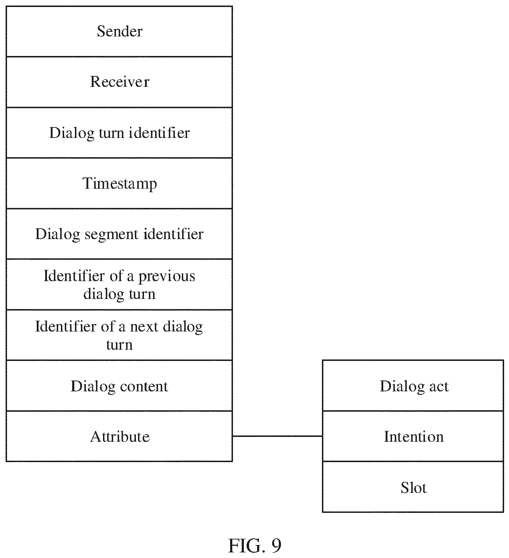

In this embodiment, in addition to structuring a dialog segment, the dialog processing apparatus may further structure a dialog turn. In an example, a structure of each dialog turn may include a sender, a receiver, a dialog turn identifier, a timestamp, an identifier of a dialog segment to which the dialog turn belongs (for example, a pointer of the dialog segment to which the dialog turn belongs), an identifier of a previous dialog turn connected based on a dialog logical sequence, an identifier of a next dialog turn connected based on the dialog logical sequence, dialog content included in the dialog turn, and attributes of the dialog turn, as shown in FIG. 9. The sender indicates a party that generates the dialog turn; the receiver indicates one or more parties that receive the dialog turn; and the attributes may include information such as a dialog act, an intention, and a slot of the dialog turn.

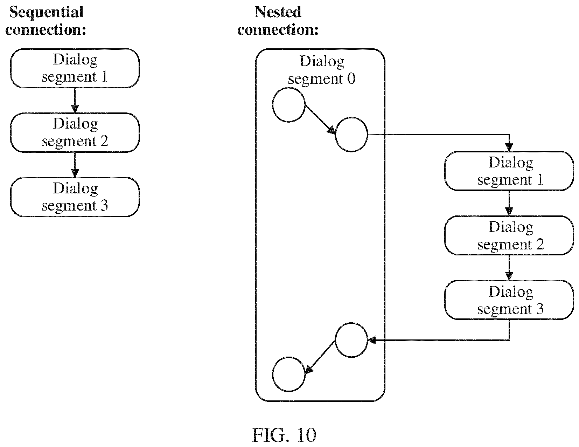

For the plurality of generated dialog segments, the dialog processing apparatus may further establish a connection between the plurality of dialog segments based on a time sequence of dialog turns in the plurality of dialog segments. For example, the dialog processing apparatus may connect the plurality of dialog segments based on a time sequence of dialog turns whose dialog acts belong to the "question" type in the dialog segments. In this way, a network structure with hierarchical characteristics can be formed based on the plurality of dialog segments. In this embodiment, a connection relationship between the plurality of dialog segments may include a sequential connection and a nested connection shown in FIG. 10. Certainly, there may also be another connection manner between the dialog segments. This is not limited in this embodiment.

In an actual dialog scenario, information is often hidden, that is, an object is specified or omitted in a dialog process. For example, in the dialog scenario shown in FIG. 1, when the A-type mobile phone is described above, the customer may subsequently raise new dialog content "Is the type I want still available?", where "the type" in the dialog refers to the "A-type" described above. For another example, the customer subsequently raises new dialog content "Is there any stock?", and "the A-type mobile phone" is omitted in the dialog content (in other words, the complete dialog content should be: Is the A-type mobile phone still in stock?) Based on this, the dialog processing apparatus may further resolve an object designation or object omission case existing in each dialog segment.

In an implementation example, for each dialog turn (referred to as a target dialog turn below) added to the dialog segment, the object processing apparatus may determine whether referential content or implicit content exits in the target dialog turn. When determining that the referential content or the implicit content exits, the dialog processing apparatus may search for the referential content or the implicit content from a dialog turn whose dialog time sequence is earlier than a dialog time sequence of the target dialog turn, for example, search for semantic attributes in a previous-level dialog segment connected to the dialog segment. The dialog processing apparatus may then add the found referential content or implicit content to the target dialog turn.

S403: The dialog processing apparatus outputs the structured data.

In a possible implementation, the dialog processing apparatus has a data display function. In this case, after obtaining the structured data, the dialog processing apparatus may display the structured data to one or more dialog participants. For example, the dialog processing apparatus may display a display interface having the structured data to the dialog participants. In this way, because the structured data includes logically ordered key information, the dialog participants can more easily grasp all key information involved in the dialog process based on the structured data. For example, for content that is not answered by the dialog participant, other dialog participants may be replied in time, so that other dialog participants do not need to repeatedly ask questions. In addition, the dialog participant can quickly locate a dialog omission based on the structured data, for example, quickly determine whether there is a question that is not asked, to notify other dialog participants of the question that is not asked in time. In this way, efficiency of a dialog between a plurality of parties can be effectively improved.

In another possible implementation, the dialog processing apparatus does not have the data display function. For example, when the dialog processing apparatus is implemented based on hardware, the dialog processing apparatus may be specifically a server. In this case, the dialog processing apparatus may transmit the structured data to a display apparatus having an information display function, for example, a terminal device used by a dialog participant, so that the display apparatus may display the structured data to one or more dialog participants, to improve efficiency of a dialog between a plurality of parties.

For ease of description, the following mainly uses an example in which the dialog processing apparatus displays information. For a manner in which the dialog processing apparatus displays information through the display apparatus, refer to the following related descriptions for understanding.

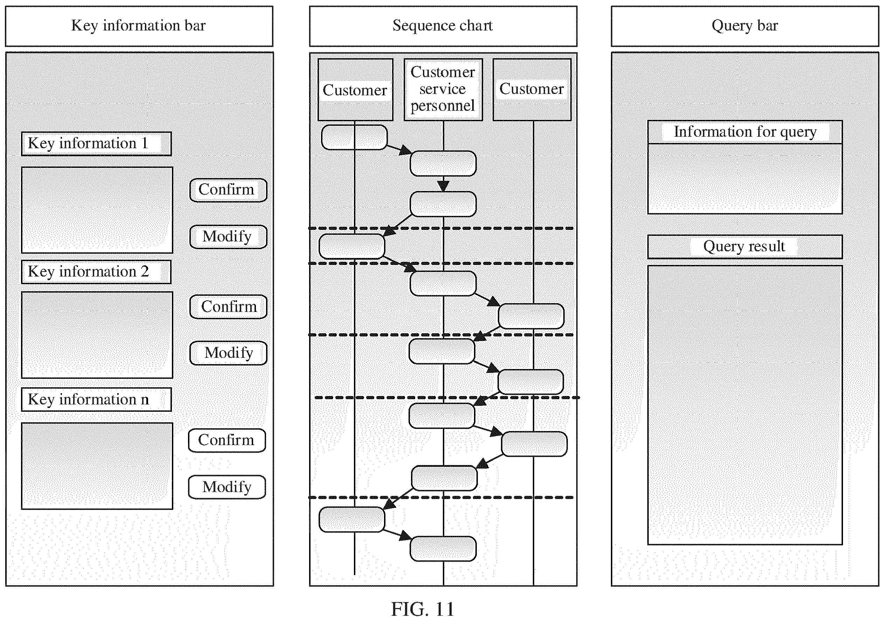

For example, the dialog processing apparatus may use a sequence chart to describe structured data, where the sequence chart may be used to describe a dialog interaction relationship between different dialog participants, and a time sequence indicated by the sequence chart is a logical sequence of key information. For example, in the scenario in which the customer and the customer service personnel perform a dialog shown in FIG. 1, the dialog processing apparatus may generate a sequence chart shown in FIG. 11 based on structured data. In this way, the customer service personnel can grasp a process of communicating with the customer based on the displayed sequence chart, to optimize work efficiency. Certainly, the foregoing uses an example in which the structured data is displayed through a sequence chart. In an actual application, the dialog processing apparatus may alternatively display the structured data in another form. For example, the structured data may be displayed in a form of a table. This is not limited in this embodiment.

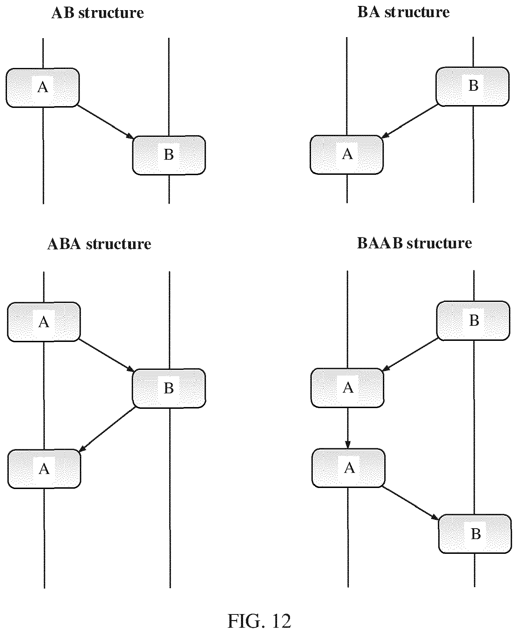

Before displaying the sequence chart corresponding to the structured data, the dialog processing apparatus may construct the sequence chart based on a dialog structure included in the structured data. For example, as shown in FIG. 12, the dialog structure may include an "AB" structure, a "BA" structure, an "ABA" structure, a "BAAB" structure, and the like. In the AB structure, party A proposes a dialog turn, and party B replies with a dialog turn to close the dialog. In the BA structure, party B proposes a dialog turn, and party A replies with a dialog turn to close the dialog. In the ABA structure, party A proposes a dialog turn, party B replies with a dialog turn based on the dialog turn, party A replies with a dialog turn again to close the dialog, and party B does not need to reply again. For example, party A replies with a dialog turn such as "OK" or "I know" to close the dialog. In the BAAB structure, after party B proposes a dialog turn, party A replies with two dialog turns in sequence, and party B replies with an additional dialog turn to close the dialog. When generating the sequence chart, the dialog processing apparatus may first determine, based on dialog turns to which the key information in the structured data belongs, dialog structures satisfied, and then connect the determined plurality of dialog structures based on a logical sequence of the dialog turns, to draw and obtain the sequence chart based on the plurality of dialog structures that are sequentially connected.

In some scenarios in an actual application, the dialog processing apparatus may set different dialog permission for different dialog participants, and may display structured data only for a dialog participant having specific dialog permission. Specifically, in the process of obtaining the structured data, the dialog processing apparatus may further determine dialog permission of each dialog participant simultaneously. In addition, the dialog processing apparatus displays the structured data to the dialog participant only when it is determined that dialog permission of the dialog participant satisfies a preset condition, and the dialog processing apparatus may not display the structured data to a dialog participant whose dialog permission does not satisfy the preset condition. In this way, different dialog participants can be treated differently, to improve flexibility of implementing the solution.

For example, the preset condition may be an identity condition (for example, a manager or a conference recorder) of the dialog participant, or may be service permission (for example, VIP permission) enabled by the dialog participant. This is not limited in this embodiment.

In some other scenarios in an actual application, the dialog processing apparatus may alternatively determine, based on a selection of the user, whether to display the structured data. For example, a display control may be pre-configured on an interface on which a dialog is performed between dialog participants. In addition, when a dialog participant performs a trigger operation (for example, clicking the display control) for displaying structured data on the display control, the dialog processing apparatus may display the structured data on the interface or another interface based on the trigger operation. However, when the dialog participant does not perform the trigger operation for the display control, the dialog processing apparatus may not display the structured data by default. In this way, the dialog processing apparatus can flexibly determine, according to a willingness of the dialog participants, whether to display the structured data, to improve flexibility of displaying the structured data and a degree of friendliness to the dialog participants.

Further, in addition to displaying the sequence chart, the dialog processing apparatus may further display key information involved in the dialog process to the dialog participants, so that the dialog participants check and confirm the displayed key information. Further, while displaying the key information, the dialog processing apparatus may further provide a function of modifying the key information for the dialog participants, as shown on the left side of FIG. 11. In this way, when determining that the key information displayed by the dialog processing apparatus does not satisfy an expectation, the dialog participants may modify the key information. Correspondingly, the dialog processing apparatus may respond to a modification operation performed by the dialog participants on the displayed key information, and modify information corresponding to the modification operation in the key information in the structured data.

In addition, the dialog processing apparatus may further execute a corresponding query process based on the key information determined by the dialog participants, and display a query result to the dialog participants, as shown on the right side of FIG. 11. For example, in the scenario in which the customer and the customer service personnel perform a dialog shown in FIG. 1, the dialog processing apparatus may query information such as a price and an inventory of the A-type mobile phone based on the key information such as "A-type", "color", and "memory version" provided by the customer, and display the information to the customer service personnel, so that the customer service personnel provide a further service for the customer based on the queried information.

In some possible implementations, the dialog processing apparatus may further perform a preset analysis operation based on the structured data, and display an obtained analysis result. For example, in a customer service scenario, the dialog processing apparatus may perform a further quantization operation based on structured data corresponding to dialog data between a customer and customer service personnel, to generate a quantization result for measuring working efficiency of the customer service personnel, so that the customer service personnel find an improvement point based on the quantization result and make up for a deficiency, and a manager can determine, based on the displayed quantization result, to perform comprehensive service appraisal on the customer service personnel. In addition, the dialog processing apparatus may use the structured data to collect statistics on concerns (for example, the raised questions) of the customer, to instruct the customer service personnel to improve quality of service for the customer. For example, the dialog processing apparatus may collect statistics on a frequency of cross-disorder of dialog turns based on the structured data, to instruct the customer service personnel to improve logic of answering a question and raising a question. For another example, the dialog processing apparatus may collect statistics on an average length of a dialog segment based on the structured data, to measure and instruct the customer service personnel to improve efficiency of understanding a problem and solving a problem For another example, the dialog processing apparatus may collect statistics on a proportion of the customer service personnel as a dialog initiator (for example, actively raising a question) based on the structured data, to instruct the customer service personnel to take the initiative in a dialog, and improve a capability of initiating a dialog and guiding a dialog. For another example, the dialog processing apparatus may collect statistics on depth of a nested dialog based on the structured data, to instruct the customer service personnel to improve a capability of simplifying a dialog process.

Further, the dialog processing apparatus may further generate display information based on the structured data, and display the generated prompt information to the dialog participants. The prompt includes a target dialog topic and may be used to prompt the dialog participants to perform a dialog on the target dialog topic. In this way, the dialog processing apparatus can prompt the dialog participants through the prompt information, to guide the dialog participants to perform a subsequent dialog (specifically, a dialog on the target dialog topic). For example, in the scenario in which the customer and the customer service personnel perform a dialog shown in FIG. 1, when content of the dialog between the customer service personnel and the customer involves only the color of the A-type mobile phone and the order placing situation, the dialog processing apparatus may generate, based on the structured data, prompt information "please ask the customer about the memory version of the A-type mobile phone", to prompt the customer service personnel to ask the customer about the memory version information of the mobile phone. The "memory version" in the prompt information is the target dialog topic, so that the customer service personnel can perform a dialog about the "memory version" based on the prompt information displayed by the dialog processing apparatus, to improve efficiency and convenience of acquiring information by the customer service personnel.

The foregoing focuses on a specific implementation process of processing and outputting structured data by the dialog processing apparatus. The following describes several example application scenarios to which the solution is applicable.

A possible application scenario is an online conference scenario. A dialog participant may participate in an online conference and input dialog content on a terminal device used by the dialog participant, to implement a dialog with another dialog participant. In this case, a dialog interface may be displayed on a terminal device used by each dialog participant, and the dialog participant may input dialog content on the dialog interface. In addition, dialog content input by each dialog participant may be transferred to another dialog participant, and the dialog content is displayed on the dialog interface of a terminal device used by another dialog participant.

During a dialog between a plurality of parties, the dialog processing apparatus may acquire, in real time, dialog content input by each dialog participant, and generate structured data based on the acquired dialog content by executing the process described in the foregoing embodiment. The dialog processing apparatus then sends the generated structured data to the terminal device used by each dialog participant, so that the terminal device displays the received structured data on the dialog interface of each dialog participant. When the terminal device displays the structured data, the structured data may be displayed in a graph, a table, text, another form, or a combination thereof. This is not limited in this embodiment. In this way, each dialog participant can quickly sort out a dialog key point based on the structured data displayed by the terminal device, to improve efficiency of the dialog between the plurality of parties.

Another possible application scenario is a network consultation scenario. Dialog participants may include customer service personnel and a customer, and the customer and the customer service personnel may communicate with each other through terminal devices. When the customer purchases a commodity on the network or seeks help from the customer service personnel through the network, the customer inputs a consultation question on a human customer service dialog interface displayed by a terminal device such as a mobile phone, a tablet computer, or a computer. The consultation question may be transmitted in real time to a terminal device (for example, a desktop computer) used by the customer service personnel, and the customer consultation question is displayed to the customer service personnel on a human customer service dialog interface of the terminal device, so that the customer service personnel input corresponding answer content on the interface after viewing the customer consultation question. The answer content is also transmitted to the terminal device used by the customer in real time, and is displayed on the human customer service dialog interface on the terminal device. In this way, the customer and the customer service personnel can implement a dialog between the two parties by inputting dialog content on respective terminal devices.

In this process, the dialog processing apparatus can obtain dialog content of both parties in real time and generate corresponding structured data based on the dialog content. The dialog processing apparatus may then send the structured data to the terminal device used by the customer service personnel, so that the customer service personnel can guide the dialog process with the customer based on the structured data displayed by the terminal device, to improve efficiency of resolving a question for the customer. Further, the dialog processing apparatus may further send the structured data to the customer, so that the customer quickly learns core content of communication between the two parties after viewing the structured data.

In the foregoing two application scenarios, the dialog processing apparatus and the terminal device may be separated. To be specific, the dialog processing acquires dialog content from each terminal device, and feeds back generated structured data to each terminal device for display. Alternatively, the dialog processing apparatus and the terminal device may be integrated into one device, and a function of the dialog processing apparatus may be integrated into the terminal device used by the dialog participant. In addition to providing a multi-party real-time dialog service, the terminal device further provides a service of generating and displaying structured data.

In an actual application, still another possible application scenario is a cloud service scenario, and a function provided by the dialog processing apparatus may be implemented through a cloud service. Specifically, when a plurality of dialog participants use respective terminal devices to perform a dialog, one or more of the dialog participants may request, through the terminal device, a cloud service for obtaining structured data from the cloud, to expect that the structured data can be viewed on the terminal device. In this case, when sending dialog content input by the dialog participant to a terminal device used by another dialog participant, the terminal device may further input the dialog content (which may also include received dialog content input by another dialog participant) to the cloud, so that the cloud can receive dialog data between the plurality of dialog participants in real time. The cloud may then generate corresponding structured data based on the dialog data, and send the structured data to the terminal device that requests the structured data, so that the terminal device displays the structured data to the dialog participant that uses the terminal device. In this way, the dialog participant can view, through the cloud service, the required structured data, to satisfy a use requirement of the dialog participant.

It should be understood that, the foregoing several example application scenarios are merely used as examples for description, and the technical solutions in this embodiment of this application may also be applicable to another possible scenario. This is not limited in this embodiment.

With reference to FIG. 1 to FIG. 12, the foregoing describes in detail the method for processing dialog data provided in this application. With reference to the accompanying drawings, the following describes a dialog processing apparatus provided in this application.

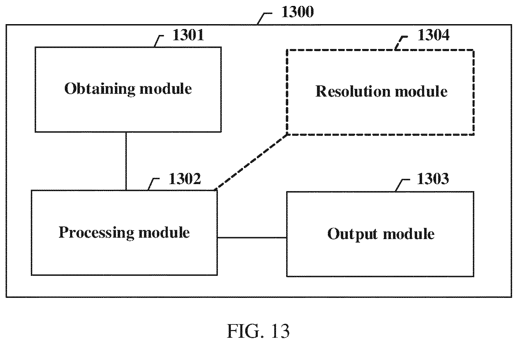

FIG. 13 is a schematic diagram of a structure of a dialog processing apparatus. The apparatus 1300 includes:

an obtaining module 1301, configured to obtain dialog data, where the dialog data includes text data corresponding to a dialog performed between at least two dialog participants;
a processing module 1302, configured to perform structured processing on the dialog data to obtain structured data, where key information in the dialog data is logically ordered in the structured data, and each piece of key information indicates a dialog topic of the dialog performed between the at least two dialog participants; and
an output module 1303, configured to output the structured data.

In a possible implementation, the processing module 1302 is further configured to:

split the dialog data to obtain a plurality of dialog turns, where each dialog turn includes one piece of key information in the structured data; and
sort the plurality of dialog turns based on semantics of the dialog turns and a dialog time sequence of the dialog turns, to generate the structured data.

In a possible implementation, the processing module 1302 is further configured to:

determine a dialog act of each dialog turn in the plurality of dialog turns;
generate a plurality of dialog segments based on dialog acts, the time sequence, and the semantics of the dialog turns, where dialog turns included in different dialog segments do not overlap; and
connect the plurality of dialog segments based on the time sequence of the dialog turns in the plurality of dialog segments.

In a possible implementation, the apparatus 1300 further includes:
a resolution module 1304, configured to: determine whether referential content or implicit content exists in a target dialog turn, where the target dialog turn is any dialog turn in the plurality of dialog turns; search, when it is determined that the referential content or the implicit content exists, for the referential content or the implicit content from a dialog turn whose dialog time sequence is earlier than a dialog time sequence of the target dialog turn; and add the found referential content or implicit content to the target dialog turn.

In a possible implementation, a connection relationship between the plurality of dialog segments includes a sequential connection and/or a nested connection.

In a possible implementation, the output module 1303 is further configured to display the key information in the structured data.

In a possible implementation, the processing module 1302 is further configured to modify, in response to a modification operation for the key information, the key information in the structured data into information corresponding to the modification operation.

In a possible implementation, the output module 1303 is further configured to perform a preset analysis operation based on the structured data to obtain an analysis result, and display the analysis result.

In a possible implementation, the output module 1303 is further configured to:

determine dialog permission of the dialog participant; and
output the structured data for the dialog participant when the dialog permission of the dialog participant satisfies a preset condition.

In a possible implementation, the output module 1303 is further configured to:

obtain a trigger operation for outputting the structured data; and
output the structured data based on the trigger operation.

In a possible implementation, the output module 1303 is further configured to display a sequence chart corresponding to the structured data, where a time sequence indicated by the sequence chart is a logical sequence of the key information.

In a possible implementation, the output module 1303 is further configured to display a dialog interface, where the dialog interface includes a first area and a second area, and the second area is for displaying dialog content between the at least two dialog participants. When outputting the structured data, the output module 1303 specifically displays the structured data in the first area in the dialog interface.

In a possible implementation, the output module 1303 is further configured to display prompt information, where the prompt information is determined based on the structured data, the prompt information includes a target dialog topic, and the prompt information is for prompting the dialog participant to perform a dialog on the target dialog topic.

The dialog processing apparatus 1300 according to this embodiment of this application may correspondingly perform the methods described in embodiments of this application, and the foregoing and other operations and/or functions of the modules of the dialog processing apparatus 1300 are separately used to implement corresponding procedures of the methods in the foregoing embodiments. For brevity, details are not described herein again.

It should be further noted that, the foregoing described embodiments are merely examples. The units described as separate parts may or may not be physically separate and the parts displayed as units may or may not be physical units, may be located in one position or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit.

However, as for this application, software program implementation is a better implementation in most cases. Based on such an understanding, the technical solutions of this application essentially or the part contributing to the conventional technology may be embodied in a form of a software object. The computer software object is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the method described in embodiments of this application.

All or some of the foregoing embodiments may be implemented by using software, hardware, firmware, or any combination thereof. When software is used to implement embodiments, all or a part of embodiments may be implemented in a form of a computer program object.

The computer program object includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses.

The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, an SSD), or the like.

## Claims

1. A method for processing dialog data, wherein the method comprises:

    obtaining dialog data, wherein the dialog data comprises text data corresponding to a dialog performed between at least two dialog participants;
    performing structured processing on the dialog data to obtain structured data, wherein key information in the dialog data is logically ordered in the structured data, and each piece of key information indicates a dialog topic of the dialog performed between the at least two dialog participants; and
    outputting the structured data.

2. The method according to claim 1, wherein the method further comprises:

    displaying a dialog interface, wherein the dialog interface comprises a first area and a second area, and the second area is for displaying dialog content between the at least two dialog participants; and
    the outputting the structured data comprises: displaying the structured data in the first area in the dialog interface.

3. The method according to claim 1 or 2, wherein the outputting the structured data comprises: displaying a sequence chart corresponding to the structured data, wherein a time sequence indicated by the sequence chart is a logical sequence of the key information.

4. The method according to any one of claims 1 to 3, wherein the method further comprises: displaying prompt information, wherein the prompt information is determined based on the structured data, the prompt information comprises a target dialog topic, and the prompt information is for prompting the dialog participant to perform a dialog on the target dialog topic.

5. The method according to any one of claims 1 to 4, wherein the performing structured processing on the dialog data to obtain structured data comprises:

    splitting the dialog data to obtain a plurality of dialog turns, wherein each dialog turn comprises one piece of key information in the structured data; and
    sorting the plurality of dialog turns based on semantics of the dialog turns and a dialog time sequence of the dialog turns, to generate the structured data.

6. The method according to claim 5, wherein the sorting the plurality of dialog turns based on semantics of the dialog turns and a dialog time sequence of the dialog turns comprises:

    determining a dialog act of each dialog turn in the plurality of dialog turns;
    generating a plurality of dialog segments based on dialog acts, the time sequence, and the semantics of the dialog turns, wherein dialog turns comprised in different dialog segments do not overlap; and
connecting the plurality of dialog segments based on the time sequence of the dialog turns in the plurality of dialog segments.

7. The method according to claim 6, wherein the method further comprises:

determining whether referential content or implicit content exists in a target dialog turn, wherein the target dialog turn is any dialog turn in the plurality of dialog turns;
searching, when it is determined that the referential content or the implicit content exists, for the referential content or the implicit content from a dialog turn whose dialog time sequence is earlier than a dialog time sequence of the target dialog turn; and
adding the found referential content or implicit content to the target dialog turn.

8. The method according to claim 6 or 7, wherein a connection relationship between the plurality of dialog segments comprises a sequential connection and/or a nested connection.

9. The method according to any one of claims 1 to 8, wherein the method further comprises: displaying the key information in the structured data.

10. The method according to claim 9, wherein the method further comprises:
modifying, in response to a modification operation for the key information, the key information in the structured data into information corresponding to the modification operation.

11. The method according to any one of claims 1 to 10, wherein the method further comprises:

performing a preset analysis operation based on the structured data to obtain an analysis result; and
displaying the analysis result.

12. The method according to any one of claims 1 to 11, wherein the outputting the structured data comprises:

determining dialog permission of the dialog participant; and
outputting the structured data for the dialog participant when the dialog permission of the dialog participant satisfies a preset condition.

13. The method according to any one of claims 1 to 11, wherein the outputting the structured data comprises:

obtaining a trigger operation for outputting the structured data; and
outputting the structured data based on the trigger operation.

14. A dialog processing apparatus, wherein the apparatus comprises:

an obtaining module, configured to obtain dialog data, wherein the dialog data comprises text data corresponding to a dialog performed between at least two dialog participants;
a processing module, configured to perform structured processing on the dialog data to obtain structured data, wherein key information in the dialog data is logically ordered in the structured data, and each piece of key information indicates a dialog topic of the dialog performed between the at least two dialog participants; and
an output module, configured to output the structured data.

15. The apparatus according to claim 14, wherein the output module is further configured to display a dialog interface, and is further configured to display the structured data in a first area in the dialog interface, wherein the dialog interface comprises the first area and a second area, and the second area is for displaying dialog content between the at least two dialog participants.

16. The apparatus according to claim 14 or 15, wherein the output module is further configured to display a sequence chart corresponding to the structured data, wherein a time sequence indicated by the sequence chart is a logical sequence of the key information.

17. The apparatus according to any one of claims 14 to 16, wherein the output module is further configured to display prompt information, wherein the prompt information is determined based on the structured data, the prompt information comprises a target dialog topic, and the prompt information is for prompting the dialog participant to perform a dialog on the target dialog topic.

18. The apparatus according to any one of claims 14 to 17, wherein the processing module is further configured to:

split the dialog data to obtain a plurality of dialog turns, wherein each dialog turn comprises one piece of key information in the structured data; and
sort the plurality of dialog turns based on semantics of the dialog turns and a dialog time sequence of the dialog turns, to generate the structured data.

19. The apparatus according to claim 18, wherein the processing module is further configured to:

determine a dialog act of each dialog turn in the plurality of dialog turns;

generate a plurality of dialog segments based on dialog acts, the time sequence, and the semantics of the dialog turns, wherein dialog turns comprised in different dialog segments do not overlap; and

connect the plurality of dialog segments based on the time sequence of the dialog turns in the plurality of dialog segments.

20. The apparatus according to claim 19, wherein the apparatus further comprises:
a resolution module, configured to: determine whether referential content or implicit content exists in a target dialog turn, wherein the target dialog turn is any dialog turn in the plurality of dialog turns; search, when it is determined that the referential content or the implicit content exists, for the referential content or the implicit content from a dialog turn whose dialog time sequence is earlier than a dialog time sequence of the target dialog turn; and add the found referential content or implicit content to the target dialog turn.

21. The apparatus according to claim 19 or 20, wherein a connection relationship between the plurality of dialog segments comprises a sequential connection and/or a nested connection.

22. The apparatus according to any one of claims 14 to 21, wherein the output module is further configured to:

determine dialog permission of the dialog participant; and

output the structured data for the dialog participant when the dialog permission of the dialog participant satisfies a preset condition.

23. The apparatus according to any one of claims 14 to 22, wherein the output module is further configured to:

obtain a trigger operation for outputting the structured data; and

output the structured data based on the trigger operation.

24. A system for processing dialog data, wherein the system comprises a display apparatus and a dialog processing apparatus, and the display apparatus is connected to the dialog processing apparatus, wherein

the dialog processing apparatus is configured to perform the method steps according to any one of claims 1, and 5 to 8; and

the display apparatus is configured to display structured data output by the dialog processing apparatus.

25. The system according to claim 24, wherein the display apparatus is further configured to display a dialog interface, and is further configured to display the structured data in a first area in the dialog interface, wherein the dialog interface comprises the first area and a second area, and the second area is for displaying dialog content between the at least two dialog participants.

26. The system according to claim 24 or 25, wherein the display apparatus is further configured to display a sequence chart corresponding to the structured data, wherein a time sequence indicated by the sequence chart is a logical sequence of the key information.

27. The system according to any one of claims 24 to 26, wherein the display apparatus is further configured to display prompt information, wherein the prompt information is determined based on the structured data, the prompt information comprises a target dialog topic, and the prompt information is for prompting the dialog participant to perform a dialog on the target dialog topic.

28. A dialog processing apparatus, comprising a processor and a memory, wherein

the processor and the memory communicate with each other; and

the processor is configured to execute instructions stored in the memory, to perform the method according to any one of claims 1 to 13.

29. A display apparatus, comprising a processor and a memory, wherein

the processor and the memory communicate with each other; and

the processor is configured to execute instructions stored in the memory, to display structured data, wherein

the structured data is obtained by performing structured processing on dialog data, the dialog data comprises text data corresponding to a dialog performed between at least two dialog participants, key information in the dialog data is logically ordered in the structured data, and each piece of key information indicates a dialog topic of the dialog performed between the at least two dialog participants.

**30.** A computer-readable storage medium, comprising instructions, wherein when the instructions are run on a computer, the computer is enabled to perform the method according to any one of claims 1 to 13.

| Customer | Customer service personnel |
|---|---|
| Hello | |
| | I'm here. How can I help you?<br><br>It's a beautiful day, starting from meeting you. Human customer service personnel Kang XX is very happy to serve you:) |
| What does it mean that the A-type mobile phone can enjoy a subsidy of up to 300 yuan? | |
| | May I ask which **color** and **memory version** you are looking at?<br><br>Have you **placed an order** yet? |
| **Not** yet | |
| So I want to ask | |
| | May I ask which **memory version** you are looking at? |
| **8+128** | |
| **Icelandic frost** | |
| | Okay, Kang XX will help you check here, please wait a moment |
| See how much is the final price with all activities participated | |
| | Please don't worry |
| OK | |
| | Okay |

FIG. 1

| Dialog segment | Customer | Customer service personnel | Key information |
|---|---|---|---|
| Initiator: Customer Purpose: to draw attention to Response: Standard response | Hello | | |
| | | I'm here. How can I help you? | |
| | | It's a beautiful day, starting from meeting you. Human customer service personnel Kang XX is very happy to serve you:) | |
| Initiator: Customer Purpose: to ask questions | What does it mean that the A-type mobile phone can enjoy a subsidy of up to 300 yuan? | | Model: A-type |
| Initiator: Customer service personnel Purpose: to acquire color information | | May I ask which color you are looking at? | Color: Icelandic frost |
| | Icelandic frost | | |
| Initiator: Customer service personnel Purpose: to acquire memory version information | | May I ask which memory version you are looking at? | Color: Icelandic frost |
| | | May I ask which memory version you are looking at? | |
| | 8+128 | | |
| Initiator: Customer service personnel Purpose: to acquire information about whether an order is placed | | Have you placed an order yet? | Whether an order is placed: No |
| | Not yet | | |
| | So I want to ask | | |
| Initiator: Customer Purpose: to ask questions Response: Standard response | | Okay, Kang XX will help you check here, please wait a moment | |
| | See how much is the final price with all activities participated | | |
| | | Please don't worry | |
| | OK | | |
| | | Okay | |

FIG. 2

Processor
302

Communication
interface 303

Structured
data

Bus 301

Program or instruction

Process
dialog data

Data

Dialog data

Display apparatus
305

Apparatus
300

Structured data

Memory 304

FIG. 3

S401

A dialog processing apparatus obtains dialog data, where the dialog
data includes text data corresponding to a dialog performed between
at least two dialog participants

S402

The dialog processing apparatus performs structured processing on
the obtained dialog data to obtain structured data, where key
information in the dialog data is logically ordered in the structured
data, and each piece of key information indicates a dialog topic of the
dialog performed between the at least two dialog

S403

The dialog processing apparatus outputs the structured data

FIG. 4

Dialog processing
apparatus

Dialog
interface

Dialog participant k
XXXX
...
XXXXX
Dialog participant 1
XXXX

XX
Confirm

Dialog
participant 1

Dialog
interface

Dialog participant k
XXXX
...
XXXXX
Dialog participant 2
XXXX

XX
Confirm

Dialog participant 2

Dialog
interface

Dialog participant k
XXXX
...
XXXXX
Dialog participant m
XXXX

XX
Confirm

Dialog
participant m

FIG. 5

| Dialog data | A1 | B1 | A2 | B2 |

⇩　　　⇩　　　⇩　　　⇩

| Dialog turn | A11 | A12 | B1 | A21 | A22 | B21 | B22 | B23 |

FIG. 6

Suspended

Created — Active — Closed

FIG. 7

EP 4 266 192 A1

FIG. 8

25

| Sender |
| Receiver |
| Dialog turn identifier |
| Timestamp |
| Dialog segment identifier |
| Identifier of a previous dialog turn |
| Identifier of a next dialog turn |
| Dialog content |
| Attribute |

| Dialog act |
| Intention |
| Slot |

FIG. 9

**Sequential connection:**

**Nested connection:**

FIG. 10

FIG. 11

EP 4 266 192 A1

**AB structure**

**BA structure**

**ABA structure**

**BAAB structure**

FIG. 12

1300

1301

Obtaining module

1304

Resolution module

1302

Processing module

1303

Output module

FIG. 13

**INTERNATIONAL SEARCH REPORT**

International application No.

**PCT/CN2021/142590**

### A. CLASSIFICATION OF SUBJECT MATTER

G06F 16/332(2019.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, EPODOC, WPI, CNKI, ISI: 对话, 结构化, 文本, 主题, 关键, 信息, 时序, 轮次, 序列图, conversation, structured, text, subject, key, information, sequence, chart, round

### C. DOCUMENTS CONSIDERED TO BE RELEVANT

| Category* | Citation of document, with indication, where appropriate, of the relevant passages | Relevant to claim No. |
|---|---|---|
| A | CN 111835921 A (PACHIRA TIMES (ZHUHAI HENGQIN) INFORMATION TECHNOLOGY CO., LTD.) 27 October 2020 (2020-10-27) description, paragraphs [0026]-[0039] and figures 1-2 | 1-30 |
| A | CN 107861951 A (CONCORD INVESTMENT (CHINA) CO., LTD.) 30 March 2018 (2018-03-30) entire document | 1-30 |
| A | CN 109002510 A (BEIJING BAIDU NETCOM SCIENCE AND TECHNOLOGY CO., LTD.) 14 December 2018 (2018-12-14) entire document | 1-30 |
| A | US 2006190537 A1 (MORRIS, Robert P.) 24 August 2006 (2006-08-24) entire document | 1-30 |
| A | US 2021027772 A1 (GONG I.O LTD.) 28 January 2021 (2021-01-28) entire document | 1-30 |

☐ Further documents are listed in the continuation of Box C.　　☑ See patent family annex.

| | |
|---|---|
| *　Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 March 2022** | **30 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

| | | International application No. |
|---|---|---|
| | | **PCT/CN2021/142590** |

| Patent document cited in search report | | | Publication date (day/month/year) | Patent family member(s) | | | Publication date (day/month/year) |
|---|---|---|---|---|---|---|---|
| CN | 111835921 | A | 27 October 2020 | None | | | |
| CN | 107861951 | A | 30 March 2018 | CN | 107967261 | A | 27 April 2018 |
| | | | | CN | 108052583 | A | 18 May 2018 |
| CN | 109002510 | A | 14 December 2018 | None | | | |
| US | 2006190537 | A1 | 24 August 2006 | WO | 2006091536 | A2 | 31 August 2006 |
| | | | | CN | 101427231 | A | 06 May 2009 |
| | | | | EP | 1851645 | A2 | 07 November 2007 |
| | | | | JP | 2008532141 | A | 14 August 2008 |
| US | 2021027772 | A1 | 28 January 2021 | EP | 3770795 | A1 | 27 January 2021 |

Form PCT/ISA/210 (patent family annex) (January 2015)